# EUROPÄISCHE PATENTSCHRIFT

(11) **EP 1 470 793 B1**
(45) Veröffentlichungstag und Bekanntmachung des Hinweises auf die Patenterteilung: **06.10.2010**
(21) Anmeldenummer: 04005188.0
(22) Anmeldetag: 04.03.2004
(51) Int. Cl.: A61C 19/00

(54) **Lichtpolymerisationsvorrichtung**
Photopolymerization device
Dispositif de photopolymérisation

(30) Priorität: 25.04.2003 DE 10319010
(43) Veröffentlichungstag der Anmeldung: 27.10.2004
(73) Patentinhaber: Ivoclar Vivadent AG, 9494 Schaan (LI)
(72) Erfinder: Senn, Bruno, 9470 Buchs (CH); Plank, Wolfgang, 6830 Rankweil (AT)
(74) Vertreter: Baronetzky, Klaus

(56) Entgegenhaltungen:
- WO-A-01/60280
- WO-A-99/21505
- US-B1- 6 193 510

## Beschreibung

Die Erfindung betrifft eine Lichtpolymerisationsvorrichtung gemäß dem Oberbegriff von Anspruch 1.

Lichtpolymerisationsvorrichtungen sind seit langem bekannt, beispielsweise aus der DE-PS 42 11 230.

Eine derartige Lichtpolymerisationsvorrichtung ist mit einem Akkusatz ausgestattet, der im Handgriff eines Handgerätes vorgesehen ist. Für das Aufladen des Akkusatzes ist eine Basisstation vorgesehen, und das Handgerät wird mit seinem Griff in entsprechende Ausnehmungen in der Basisstation eingestellt. Um die Verfügbarkeit zu erhöhen, sind zwei entsprechende Ausnehmungen vorgesehen, so dass zwei Handgeräte in die gleiche Basisstation eingestellt werden können, von denen eins geladen und das andere in Betrieb genommen wird.

Auch die WO-A-9921505 beschreibt eine solche Vorrichtung bestehend aus Handgerät und Basisstation. Verschiedene Timer- und Intensitätseinstellungen sowie eine Kalibrierfunktion sollen ein Vorhärten, Ruhen und Endhärten des zu härtenden Materials ermöglichen, um Spannungen in dem lichthärtenden Material zu verringern.

In der WO-A-0160280 wird eine Anordnung beschrieben, die über das Handgerät und die Basisstation hinaus noch eine serielle Verbindung zur Datenübertragung an einen angeschlossenen PC und die Abgabe verschiedener Wellenlängen zur Bestrahlung des lichthärtenden Werkstoffes ermöglicht.

Derartige Lösungen bieten zwar eine große Verfügbarkeit. Aufgrund der zwei erforderlichen Handgeräte sind sie jedoch vergleichsweise aufwändig.

Ferner ist es für Handgeräte in anderen technischen Gebieten, beispielsweise bei Akkubohrern oder -schraubbohrer, lange bekannt, einen Akkusatz als kompakte Einheit steckbar mit dem Handgerät zu verbinden und bei Bedarf lediglich den Akkusatz auszutauschen beziehungsweise aufzuladen.

Derartige Lösungen vermeiden das Erfordernis eines separaten Handgerätes. Andererseits ist es bekannt, dass Akkumulatoren eine Verschlechterung Ihrer Qualität im Laufe der Betriebszeit erfahren. Hierzu gehört der sogenannte Memory-Effekt, aber auch die gegen Ende der Lebensdauer zunehmende Selbstentladung.

Um derartige Nachteile in ihren negativen Auswirkungen auf Lichtpolymerisationsvorrichtungen zu begrenzen, sind in der DE-PS 42 11 230 verschiedene Maßnahmen vorgesehen, zu denen die Überwachung der Kapazität des Akkusatzes zählt. Die entsprechende Überwachungsschaltung ist bei dieser Lösung im Handgerät untergebracht. Bei räumlicher Trennung von Akkusatz und Handgerät ist jedoch eine derartige Überwachung, die auf der Erfassung von Lade- und Endladekurven beruht, nicht möglich oder zumindest nicht sinnvoll, denn auch zur gleichen Zeit hergestellte Akkusätze können durchaus unterschiedliche Eigenschaften haben, die sich zu dem je nach dem Einsatz des Akkusatzes unterschiedlich entwickeln.

Um dies zu vermeiden, ist es für Digital-Filmkameras bekannt geworden, das Akkupack selbst mit einem Mikrocontroller auszustatten, der die aktuellen Parameter des Akkusatzes und deren Entwicklung erfasst und abspeichert.

Ein gewisser Nachteil sämtlicher Akkusätze, auch hochwertiger Lithium-Ionen-Akkus, ist ihr Gewicht. Wenn ein Handgerät kabelfrei bedient werden muss, ist andererseits die Verwendung eines Akkusatzes (oder zumindest eines Batteriesatzes) unabdingbar.

Zahnärztinnen oder Zahnärzte, denen es auf leichte Handhabung eines Lichtpolymerisationsgerätes ankommt, bevorzugen wegen des Gewichtes von Akkusätzen mit einem Stromversorgungskabel mit der Basisstation verbundene Handgeräte. Auch derartige Handgeräte sind seit langem bekannt, wobei mittlerweile vergleichsweise leichte und dennoch hochflexible Kabel realisierbar sind.

Es ist auch bereits bekannt geworden, Handgeräte mit einem wahlweise verwendbaren Netzanschluss zu verwenden, und zusätzlich mit einer Aufnahmemöglichkeit für einen Akkusatz auszurüsten.

Eine derartige Lösung ist beispielsweise aus der DE 41 16 604 bekannt. Ein derartiges Handgerät ist jedoch nicht besonders gut handhabbar, wenn der Akkusatz zur Gewichtserleichterung entfernt wird, so dass es sich nicht durchgesetzt hat.

Abgesehen von der Erfassung von Betriebsparametern des Akkusatzes ist es bei Lichtpolymerisationsgeräten wünschenswert, auch die Qualität der Lichtabgabe selbst zu erfassen. Hierzu sind Lichtsensoren vorgeschlagen worden, die die abgegebene Lichtleistung mindestens näherungsweise erfassen und überwachen.

Andererseits stellt die abgegebene Lichtleistung das wichtigste Qualitätskriterium einer Lichtpolymerisationsvorrichtung dar. Bei Verwendung von üblichen Halogenglühlampen verdampfen bekanntlich Teile der für die Glühwendel verwendeten Wolframlegierung, so dass die Lichtleistung sinkt.

Wenn nun ein akkubetriebenes Lichthärtgerät bereits länger im Betrieb ist, sinkt regelmäßig sowohl die Lichtleistung als auch die Kapazität der Akkumulatoren in dem Akkusatz. Diese Gegenläufigkeit der Entwicklungen verstärkt die Gefahr, dass eine unvollständige Aushärtung von Zahnersatzteilen im Mund eines Patienten, die aus lichtpolymerisierbaren Kunststoffen bestehen, vorgenommen wird. Hierdurch verbleiben gegebenenfalls Monomere, und Regressansprüche gegen den Zahnarzt beziehungsweise den Hersteller der Lichtpolymerisationsvorrichtung sind nicht ausgeschlossen.

Ferner haben die bislang bekannten Lösungen keine besonders gute Flexibilität in der Handhabung und vermögen den unterschiedlichen Anforderungsprofilen der Kunden nur unbefriedigend Rechnung zu tragen. Auch lässt die Sicherheit des Polymerisationsvorgangs teilweise zu wünschen übrig.

Daher liegt der Erfindung die Aufgabe zugrunde, eine Lichtpolymerisationsvorrichtung gemäß dem Oberbegriff von Anspruch 1 zu schaffen, die über die gesamte Lebensdauer eine konstante Lichtleistung des Handgerätes sicherstellt, wobei die Zuverlässigkeit der Polymerisationsvorrichtung besonders gut ist, aber dennoch ein flexibler Betrieb auch bei unterschiedlichen Anforderungsprofilen möglich ist.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, mit einem Datenbus, der mindestens die Module Handgerät und Akkupack verbindet, einen Datentausch zu erlauben. Dies eröffnet vielfältige Möglichkeiten, auch wenn an der Steckverbindung lediglich ein einziger weiterer Kontakt für die Bereitstellung des Datenbusses vorgesehen ist. Beispielsweise kann ein Mikrocontroller, der dem Akkusatz zugeordnet ist, darüber informiert werden, dass an sich eine höhere Leistung aufgrund einer sich verschlechternden Lichtausbeute der Halogenlichtquelle erforderlich ist, so dass rechtzeitig Gegenmaßnahmen getroffen werden können. Umgekehrt kann ein in dem Handgerät vorgesehener Mikrocontroller darüber informiert werden, dass der Ladezustand des Akkusatzes ein Wiederaufladen erfordert, wobei das Handgerät bzw. dessen Mikrocontroller unter Einbeziehung der voreingestellten Lichthärtzeit die Entscheidung über einen möglichen Polymerisationsvorgang auf besserer Entscheidungsgrundlage treffen kann.

Durch die voneinander unabhängige Erfassung ist aber auch ein beliebiger Wechsel verschiedener Akkusätze möglich, und es ist beispielsweise möglich, ein Lichthärtgerät mit zwei Akkusätzen auszustatten, von denen einer geladen und der anderer bereitgehalten wird. Dennoch kann die je zur Verfügung stehende Entladekapazität des Akkusatzes dem Handgerät zugeleitet werden. Besonders günstig ist es, dass auch bei Netzbetrieb durch ein Modul, dass hier als Anschlussmodul bezeichnet ist, eine leichte und praktische Handhabung des Handgerätes möglich ist. Das Anschlussmodul ist in erfindungsgemäß vorteilhafter Weise in gleicher Weise wie ein Akkusatz geformt, und weist and seinem unterem Ende einen Anschluss für ein flexibles Kabel auf, die elektrische Versorgungsenergie dem Handgerät zuleitet.

Hierfür sind drei Leiter (Speisespannungen, Masse und Datenbus) ausreichend, wobei der Leiter für den Datenbus bevorzugt einen geringeren Leiterquerschnitt von beispielsweise einem Zehntel bis einem Drittel des Leitungsquerschnittes der Speisespannungsleiter aufweist und sich etwas versetzt zwischen diesen erstreckt, so dass die Flexibilität des Kabels nicht beeinträchtigt wird.

Es ist günstig, wenn ein kleiner Dreifachstecker die erforderlichen Verbindungen sichergestellen kann. Bei Anschluss einer Steckverbindung an dem Anschlussmodul lässt sich durch die Anordnung der Stecker in einem Dreieck zudem zugleich eine Sicherung gegen das fehlerhafte Einstecken bereitstellen.

Besonders günstig ist es auch, wenn die Steckverbindungen zwischen Akkupack und Handgerät beziehungsweise zwischen Basisstation und Handgerät oder zwischen Servicemodul und Handgerät verdeckt und berührungsgeschützt realisierbar sind. Hierdurch lässt sich ohne weiteres ein sicherer Schutz gegen Korrosion auch bei Handhabung über mehrere Jahre gewährleisten.

Besonders günstig ist es ferner, wenn die beweglichen Module, also Akkupack, Anschlussmodul und/oder Servicemodul mit zwei Schnittstellen ausgestattet sind, die den Datenbus durchleiten. Hierdurch lässt sich ein bustypisches Verhalten realisieren, dass also transparent Daten auch durch die Module hindurch leitbar sind.

Bevorzugt ist eine integrierte Schnittstelle, die durch das Gehäuse abgedeckt ist, während die andere Schnittstelle bevorzugt an dem unteren Ende vorgesehen ist und bei Bedarf ebenfalls abdeckbar ist.

Durch die Realisierung eines Datenbusses lässt sich beispielsweise die Lichtmessung in der Basisstation leicht zur automatischen Kalibrierung des Handgerätes nutzen, das dann über seinen Mikrocontroller die entsprechend erforderlichen Einstellungen vornimmt. Die Mikrocontroller in den erwähnten Modulen arbeiten in an sich bekannter Weise mit den übrigen dort je integrierten Bauteilen zusammen.

Erfindungsgemäß besonders günstig ist es, dass sich ein Datentausch in beliebiger Weise über den erfindungsgemäßen Datenbus realisieren lässt, auch wenn lediglich ein Teil der möglichen Module eingesetzt wird. Es ist beispielsweise auch möglich, den Datenbus über einen Busumsetzer mit einem PC zu verbinden, der dann eine Datenauswertung, eine Protokollierung, aber auch die Möglichkeit der Änderung von Grundeinstellungen bietet.

Ferner ist es besonders günstig, dass bei der Verwendung eines Mikrocontrollers die in dem betreffenden Modul vorgesehenen elektronischen Bauteile von dem Mikrocontroller überwacht und gesteuert werden können. In diesem Zusammenhang ist bevorzugt mindestens ein Mikrocontrollder im Handgerät und ein Microcontroller in dem Akkupack vorgesehen, und in einer besonders günstigen Ausgestaltung ist zusätzlich ein Mikrocontroller in der Basisstation vorgesehen.

Gemäß einer weiteren vorteilhaften Ausgestaltung ist es vorgesehen, dass das Handgerät einen Mehrfachstecker oder eine -buchse für die Verbindung mit dem Akkupack oder einem Anschlussmodul aufweist, die insbesondere sowohl die lösbare Speiseverbindung als auch die Datenbus-Schnittstelle bereitstellen.

Gemäß einer weiteren vorteilhaften Ausgestaltung ist es vorgesehen, dass die Basisstation eine Aufnahme oder Ausnehmung für das Anbringen oder Einbringen des Akkupacks aufweist. Ferner kann die Basisstation eine Versorgungs-Steckverbindung aufweisen, über welche sie mit elektrischer Energie, insbesondere über ein Netzteil, versorgbar ist. Die Versorgungs-Steckverbindung weist bevorzugt auch einen Buskontakt auf, der insbesondere in die Steckverbindung integriert ist und über welche die Basisstation mit einem Computer, insbesondere über eine standardisierte Schnittstelle, verbindbar ist.

Gemäß einer weiteren vorteilhaften Ausgestaltung ist es vorgesehen, dass der Anschluss des Computers an den Serviceadapter über die Basisstation und den Datenbus erfolgt, sowie, dass das Handgerät in der Basisstation abstützbar und in an sich bekannter Weise aufladbar ist, wobei die Abstützung insbesondere über ein in das Handgerät eingesetztes oder an es angefügtes Modul erfolgt.

Gemäß einer besonders günstigen Ausgestaltung ist es vorgesehen, dass das Handgerät bei in die Basisstation eingestellter Position Steckkontakte verbindet, über welche Datenbus der verläuft und dass insbesondere der Datenbus von der Basisstation über das Modul in das Handgerät verläuft.

Gemäß einer weiteren vorteilhaften Ausgestaltung ist es vorgesehen, dass bei in das Handgerät eingesetztem Akkupack und in die Basisstation eingesetztem Handgerät das Anschlussmodul in eine Aufnahme in der Basisstation einsetzbar ist und eine Verbindung zu einer externen Energiequelle, insbesondere einem Netzteil, bildet, oder dass bei in das Handgerät eingesetztem Akkupack und in die Basisstation eingesetztem Handgerät das Servicemodul in eine Aufnahme in der Basisstation einsetzbar ist und eine Verbindung zu einer externen Energiequelle, insbesondere einem Netzteil, bildet.

Ferner sind die Steckverbindungen für den Anschluss der Module an dem Handgerät und/oder der Basisstation bevorzugt versenkt und berührungsgeschützt ausgebildet.

Weitere Vorteile, Einzelheiten und Merkmale ergeben sich aus der nachfolgenden Beschreibung eines Ausführungsbeispieles der Erfindung anhand der Zeichnung:

Es zeigen:
- Fig. 1: eine schematische Ansicht eines Teiles einer erfindungs- gemäßen Lichtpolymerisationsvorrichtung in einer erfin- dungsgemäßen Ausführungsform;
- Fig. 2: eine Ansicht der Ausführungsform gemäß Fig. 1, wobei eine andere Bestückung des Handgerätes gewählt ist;
- Fig. 3: die Ausführungsform gemäß Fig. 1 und 2, unter Darstellung sowohl des Handgerätes als auch der Basisstation und ver- schiedener weiterer Module;
- Fig. 4: eine Ansicht eines Akkupackes als Teils der erfindungsge- mäßen Ausführungsform;
- Fig. 5: eine Ansicht des Anschlussmodules als Teil der erfin- dungsgemäßen Ausführungsform; und
- Fig. 6: eine Ansicht des Servicemoduls als Teil der erfindungs- gemäßen Ausführungsform.

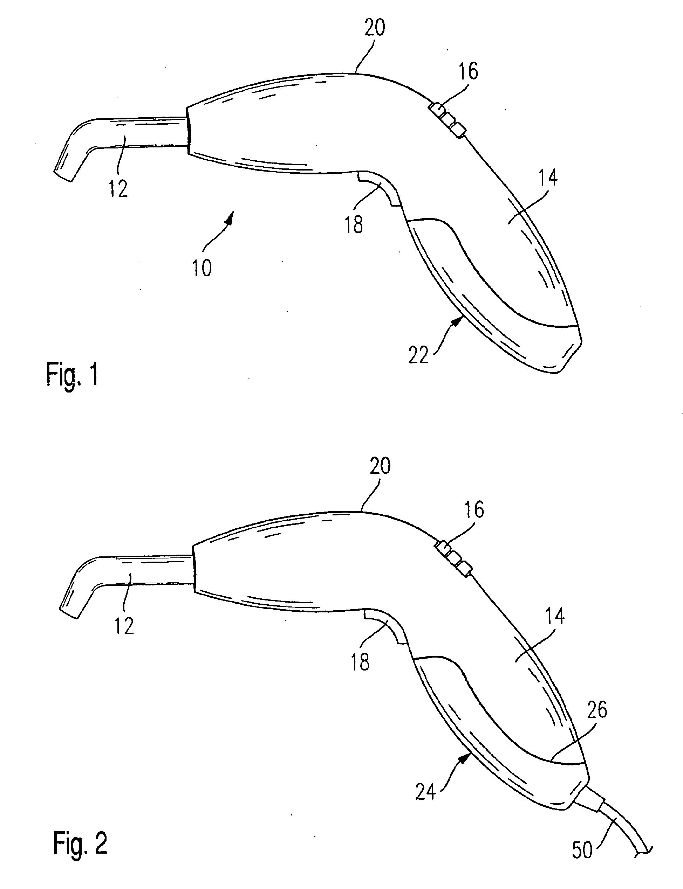

In Fig. 1 ist ein Teil einer Ausführungsform einer erfindungsgemäßen Lichtpolymerisationsvorrichtung dargestellt, nämlich ein Handgerät 10. Das Handgerät 10 weist einen an sich bekannten, im Wesentlichen pistolenförmigen Aufbau auf. Ein Lichtleitstab 12, der sich an seinem vorderen Ende erstreckt, ist am Ende in ebenfalls an sich bekannter Weise um 45° abgekröpft. Am oberen Ende eines Handgriffs 14 ist ein Programmwahlschalter 16 angeordnet, sowie gegebenenfalls auch eine Anzeigevorrichtung für die Betriebsart oder sonstige Informationen zu dem Zustand des Handgeräts 10.

Dem Programmwahlschalter 16 gegenüberliegend ist ein Betätigungsschalter 18 angeordnet, der wie ein Auslöser, beispielsweise mit dem Zeigefinger der Betätigungshand, betätigbar ist.

Das Handgerät 10 weist ein abgewinkeltes Gehäuse 20 auf, das - wie es aus Fig. 1 ersichtlich ist - eine abgerundete Form hat, die handfreundlich gestaltet ist. Beispielsweise weist der Handgriff 14 einen balligen Grundcharakter auf. Dem Betätigungsschalter 18 benachbart erstreckt sich ein Akkupack 22, das die harmonische Außenform des Handgriffs 14 an der Vorderseite gewährleistet. Der Akkupack 22 ist durch innen liegende Rastzungen sicher an dem Handgriff 14 befestigt, so dass er sich auch bei unsanftem Ablegen des Handgeräts nicht löst. Sowohl die Speiseverbindung als auch der erfindungsgemäße Datenbus erstrecken sich innen liegend zwischen Akkupack 22 und dem Handgerät 10 im Übrigen, was weiter unten im Einzelnen erläutert ist.

Der Akkupack 22 ist lösbar an dem Handgriff 14 gelagert. Gemäß Fig. 2 lässt sich der Akkupack durch ein Anschlussmodul 24 ersetzen, das die gleiche Außenform aufweist. Wie es aus Fig. 1 und 2 dargestellt ist, erstreckt sich die Trennlinie 26 zwischen dem Akkupack bzw. Anschlussmodul 22 bzw. 24 einerseits und dem Gehäuse 20 andererseits nicht gerade, sondern geschwungen. Dies trägt nicht nur zur ästhetisch befriedigenderen Ansicht bei, sondern ermöglicht auch eine bessere Verankerung mit geringem konstruktivem Aufwand.

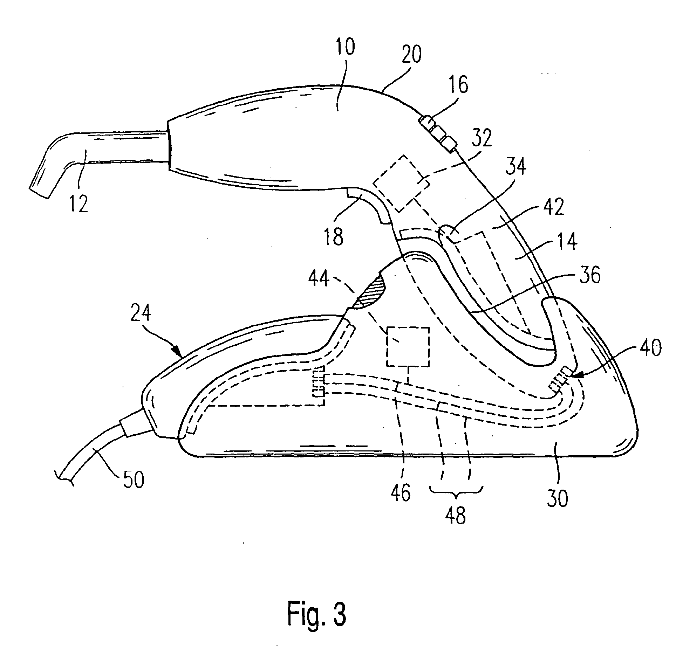

Auf Fig. 3 ist ersichtlich, wie das Handgerät 10 in eine Basisstation 30 eingestellt werden kann. Das Handgerät 10 weist - beispielsweise im Bereich zwischen dem Betätigungsschalter 18 und dem Programmwahlschalter 16 - einen Mikrocontroller 32 auf, der zur Steuerung, Kalibrierung und Datenübertragung für die wesentlichen Funktionen des Handgeräts dient. Das Handgerät weist ferner eine innen liegende Mehrfach-Steckbuchse 34 auf. Über die Steckbuchse 34 wird sowohl die lösbare Speiseverbindung als auch die Datenbus-Schnittstelle bereitgestellt. Diese drei Leiter sind durch das in den Handgriff eingesetzte Modul 36 durchgeschleift.

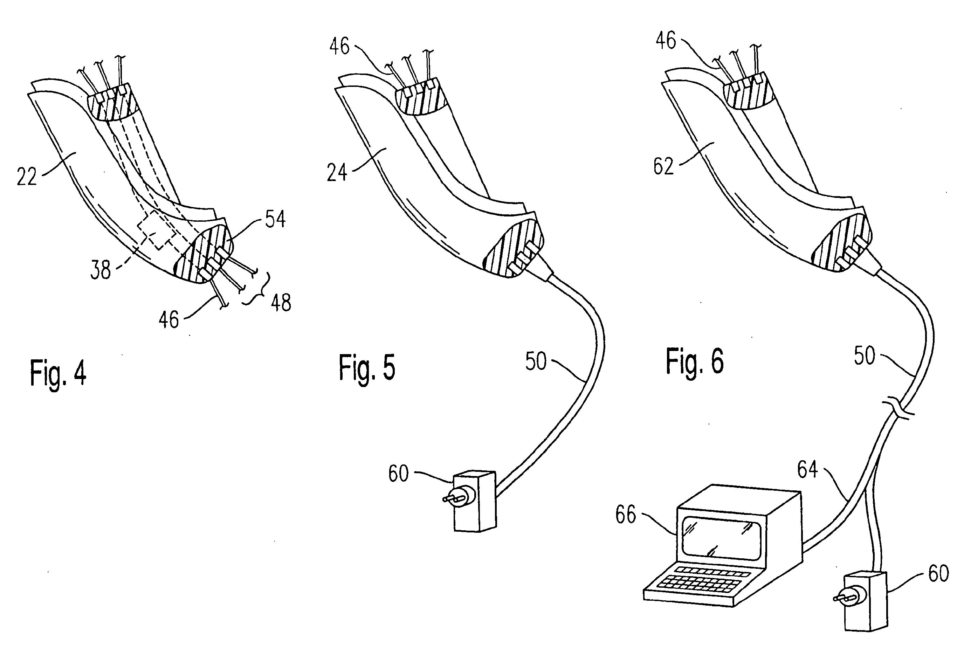

In dem dargestellten Ausführungsbeispiel gemäß Fig. 3 ist der Akkupack 22 als Modul eingesetzt. Er weist einen mit der Mehrfach-Steckbuchse 34 zusammenwirkenden Stecker auf, sowie einen weiteren Mikrocontroller 38, der in Fig. 4 dargestellt ist. An seinem unteren Ende, das zugleich das untere Ende des Handgriffs 14 bildet, ist eine weitere Steckbuchse ausgebildet, die berührungsgeschützt ist. Die Steckbuchse stellt einen elektrischen Kontakt mit einem entsprechenden Stecker 40 mit einer Mehrzahl von Steckkontakten der Basisstation 30 bereit, wenn das Handgerät 10 in die Basisstation 30 eingestellt ist. Hierzu weist die Basisstation eine Ausnehmung 42 auf, die lediglich eine eindeutige Steckposition für das Handgerät 10 erlaubt.

Die Basisstation 30 weist ebenfalls einen Mikrocontroller 44 auf. Der Mikrocontroller 44 ist mindestens auch an einen Datenbus 46 angeschlossen, während der Datenbus 46 und Versorgungsleitungen 48 auch durch die Basisstation 30 durchgeschleift sind.

Die Basisstation 30 weist eine weitere Ausnehmung auf, die für die Aufnahme eines Moduls wie des Akkupacks 22 oder des Anschlussmoduls 24 geeignet ist. In dem dargestellten Ausführungsbeispiel ist das Anschlussmodul 24 in diese Ausnehmung eingesetzt. Auch hier ist eine Mehrfach-Steckbuchse vorgesehen, die an der Basisstation 30 ausgebildet ist und in ihrer Ausgestaltung der Mehrfach-Steckbuchse 34 des Handgeräts entspricht.

An dem gegenüberliegenden Ende des Anschlussmoduls 24 ist ein Speisekabel 50 - lösbar oder fest - befestigt, das an seinem anderen Ende mit einem Netzteil verbunden sein kann, das eine Spannung wie 12 oder 24 V bereitstellt und als elektrische Versorgungsenergie der Basisstation und damit dem Handgerät zuleitet. Dieses Speisekabel 50 kann auch zur direkten Versorgung des Handgeräts 10 bei Netzbetrieb eingesetzt werden, wenn das

Anschlussmodul 24 in das Handgerät eingesetzt ist.

Anstelle des Anschlussmoduls 24 lässt sich auch ein Servicemodul einsetzen, der ebenfalls eine Netzversorgung bietet und aus Fig. 6 ersichtlich ist.

In Fig. 5 ist ein Akkupack 22 dargestellt. Der Mikrocontroller 38 ist mindestens an den Datenbus 46 angeschlossen, wobei es sich versteht, dass zur Versorgung des Mikrocontrollers 38 Zuführleitungen vorgesehen sind, die sich von den Versorgungsleitungen 48 zu ihm hin erstrecken. Sämtliche Mikrocontroller 38 weisen in an sich bekannter Weise entweder nichtflüchtige Speicher oder eine Pufferbatterie auf, die den Datenhalt auch dann gewährleisten, wenn die Versorgung mit elektrischer Energie von außen nicht besteht. Aus Fig. 4 ist ersichtlich, dass an dem unteren Ende des Akkupacks eine Mehrfachbuchse 54 ausgebildet ist, die das Einstecken an dem Stecker 40 der Basisstation 30 erlaubt.

Die äußere Form des Anschlussmoduls 24 entspricht der äußeren Form des Akkupacks 22. In das Handgerät eingesetztem oder an es angefügtem Zustand erstrecken sich so bündige Oberflächen, die eine grifffreundliche Bedienung des Handgeräts 10 erlauben. Das Speisekabel 50 ist mit einem Stecker-Netzteil 60 verbunden, so dass ein direkter Netzbetrieb des Handgeräts 10 über das eingesetzte Anschlussmodul möglich ist, aber auch ein Laden des Akkupacks 22 bei dem in Fig. 3 eingesetzten Zustand mindestens des Akkupacks 22 in die Basissation 30.

Es versteht sich, dass in diesem Zustand ein zweiter Akkupack 22 in das Handgerät 10 einsetzbar ist, so dass das Handgerät 10 in Betrieb genommen werden kann, auch wenn währenddessen ein zweiter Akkupack 22 aufgeladen wird.

Bei Verwendung eines zusätzlichen Servicemoduls 62, der ebenfalls in das Handgerät 10 als Modul 36 eingesetzt werden kann, lässt sich das Handgerät 10 in diesem Zustand sogar im Netzbetrieb betreiben. Das Servicemodul 62 weist nämlich zusätzlich zu der Bereitstellung eines Speisekabels mit einem Anschluss an ein Steckernetzteil 60 die Bereitstellung eines seriellen Busses 64 für den Anschluss an einen PC 66 auf. Hierzu erfolgt eine Datenkonvertierung zwischen dem seriellen Datenbus 46 und einer PCkompatiblen seriellen Verbindung, wie einer Verbindung gemäß den Spezifikationen RS-232 oder RS-422. Die entsprechende Datenkonvertierung und ein weiterer Mikrocontroller sind in dem Servicemodul 62 vorgesehen.

Besonders günstig ist es, dass das Anschlussmodul 24, der Akkupack 22 und das Servicemodul 62 beim Einsetzen oder Anfügen in das oder an das Handgerät eine äußere Form aufweisen, die bündig mit der Oberfläche des Handgeräts verläuft. Hierdurch läßt sich eine ergonomische Handhabung trotz verhältnismäßig kleiner Bauform der Lichtpolymerisationsvorrichtung gewährleisten.

Es versteht sich, dass die erfindungsgemäße Ausgestaltung zahlreiche Kombinationsmöglichkeiten für die Bereitstellung der Bedienungsfunktion für das Handgerät bieten. Wesentlich ist die Übermittlung der je relevanten Daten über den Datenbus, und zwar unabhängig von dem Steckzustand und der Steckreihenfolge. Abgleich der Daten kann dann je bei eingestecktem Zustand zwischen zwei Modulen erfolgen, und auch eine Kalibrierung des Handgeräts ist in beliebiger Weise durch die Verwendung des Servicemoduls 62 möglich. Es versteht sich auch, dass das Handgerät 10 in einmal kalibriertem Zustand autark ist, so dass beispielsweise nicht jede Zahnarztpraxis über einen Servicemodul 62 verfügen muss. Dennoch kann der Verschlechterung der Lampenleistung wie auch der Kapazitätsminderung eines Akkupacks im Laufe ihrer Lebensdauer gezielt und detailliert Rechnung getragen werden, und es können automatisch die erforderlichen Maßnahmen eingeleitet werden.

## Patentansprüche

1. Lichtpolymerisationsvorrichtung, die mindestens die Module Basisstation (30), Handgerät (10) und Akkupack (22) aufweist, wobei das Handgerät (10) in die Basisstation (30) einsteckbar ist,
**dadurch gekennzeichnet, dass** ein Datenbus (46) mindesten zwischen Handgerät (10) und Akkupack (22) vorgesehen ist, über den Daten, insbesondere Steuerdaten für das Handgerät (10), transferierbar sind, wobei der Akkupack (22) an dem Handgerät (10) lösbar befestigt und durch ein mit einer externen Stromquelle verbindbares Anschlussmodul (24) austauschbar ist, und wobei mindestens Handgerät (10) und Akkupach (22) einen Mikrocontroller (32, 38, 44), der an den Datenbus (46) angeschlossen ist, aufweisen.

2. Lichtpolymerisationsvorrichtung nach Anspruch 1, **dadurch gekennzeichnet, dass** das Handgerät (10) und der Akkupack (22) je wenigstens eine Schnittstelle für den Datenbus (46) aufweisen, die zusätzlich und insbesondere benachbart zu Speisestromkontakten für die Zuleitung der Versorgungsenergie angeordnet ist.

3. Lichtpolymerisationsvorrichtung nach Anspruch 1, **dadurch gekennzeichnet, dass** die Basisstation (30) und/oder wenigstens ein anderes Modul (62) je wenigstens eine Schnittstelle für den Datenbus (46) aufweisen, die zusätzlich und insbesondere benachbart zu Speisestromkontakten für die Zuleitung der Versorgungsenergie angeordnet ist.

4. Lichtpolymerisationsvorrichtung nach Anspruche 2 oder 3, **dadurch gekennzeichnet, dass** die wenigstens eine Schnittstelle für den Datenbus (46) und die Speisestromkontakte in Form eines Mehrfachsteckers bzw. einer -buchse ausgebildet sind.

5. Lichtpolymerisationsvorrichtung nach einem der vorhergehenden Ansprüche, **dadurch gekennzeichnet, dass** der Datenbus (46) zwischen dem Handgerät (10) und dem Akkupack (22) oder zwischen der Basisstation (30), dem Akkupack (22) und dem Handgerät (10) angeordnet ist.

6. Lichtpolymerisationsvorrichtung nach einem der vorhergehenden Ansprüche, **dadurch gekennzeichnet, dass** das insbesondere über ein Netzteil (60) mit einer externen Stromquelle verbundene Anschlussmodul (24), insbesondere über einen Mehrfachstecker oder eine -buchse mit dem Handgerät (10) oder der Basistation (30), in Verbindung bringbar ist.

7. Lichtpolymerisationsvorrichtung nach einem der vorhergehenden Ansprüche, **dadurch gekennzeichnet, dass** bei Netzbetrieb des Handgerätes (10) das Anschlussmodul (24) in das Handgerät (10), insbesondere in dessen Handgriff (14), integriert ist und die elektrische Versorgungsenergie über ein Speisekabel (50) dem Handgerät (10) zuleitet.

8. Lichtpolymerisationsvorrichtung nach einem der vorhergehenden Ansprüche, **dadurch gekennzeichnet, dass** ein insbesondere mit einem Computer (66) sowie über ein Netzteil (60) mit einer externen Energiequelle verbindbares Servicemodul (62) mit dem Handgerät (10) oder der Basisstation (30) verbindbar ist, über welches wenigstens das Handgerät (10) einstellbar, insbesondere kalibrierbar ist und/oder über welches im Handgerät (10) und/oder im Akkupack (22) und/oder in der Basisstation (30) gespeicherte Daten auf den Computer (66) übertragbar sind.

9. Lichtpolymerisationsvorrichtung nach einem der vorhergehenden Ansprüche, **dadurch gekennzeichnet, dass** Anschlussmodul (24), Akkupack (22) und ein Servicemodul (62) beim Einsetzen oder Anfügen in das oder an das Handgerät (10) eine äußere Form aufweisen, die bündig mit der Oberfläche des Handgerätes (10) verläuft.

10. Lichtpolymerisationsvorrichtung nach einem der vorhergehenden Ansprüche, **dadurch gekennzeichnet, dass** Akkupack (22), Anschlussmodul (24) und Servicemodul (62) mindestens teilweise in dem Gehäuse (20) der Basisstation (30) aufnehmbar oder an dieser befestigbar sind.

11. Lichtpolymerisationsvorrichtung nach einem der vorhergehenden Ansprüche, **dadurch gekennzeichnet, dass** das Anschlusselement (24) und das Servicemodul (62) ein Gehäuse besitzen, dessen Form und Schnittstelle mit dem Gehäuse des Akkupacks (22) übereinstimmt.

12. Lichtpolymerisationsvorrichtung nach einem der vorhergehenden Ansprüche, **dadurch gekennzeichnet, dass** das Gehäuse des Akkupacks (22), des Anschlussmoduls (24) oder des Serviceadapters (62) ein Teil des Handgerätes-Handgriffes bildet.

13. Lichtpolymerisationsvorrichtung nach einem der vorhergehenden Ansprüche, **dadurch gekennzeichnet, dass** der Datenbus (46) an ein Aladin-Bus oder ein anderer serieller Bus ist, der insbesondere lediglich eine Signalleitung benötigt.

14. Lichtpolymerisationsvorrichtung nach einem der vorhergehenden Ansprüche, **dadurch gekennzeichnet, dass** der Datenbus (46) feste Adressen der Module Handgerät (10) und Basisstation (30) festlegt, die zueinander gleichrangig sein, und dass insbesondere mindestens das Handgerät (10) und/oder die Basisstation (30) und/oder der Akkupack (22) einen Mikrocontroller (38, 44) aufweisen.

15. Lichtpolymerisationsvorrichtung nach einem der vorhergehenden Ansprüche, **dadurch gekennzeichnet, dass** Kalibrier-, Lichtleistungs-, Mess- und/oder Betriebszeiten-Daten der Lichtpolymerisationsvorrichtung mindestens in dem Handgerät (10), insbesondere nach dem Auslesen über den Datenbus (46) auch in der Basisstation (30), abgespeichert sind.

## Claims

1. A light polimerization device, comprising at least the following modules: a base station (30), a hand-held device (10), and a battery pack (22), said hand-held device (10) being insertable into the base station (30),
**characterized in that** a data bus (46) is at least provided between the hand-held device (10) and the battery pack, via which data, in particular control data for the hand-held device (10) is transferable, wherein said battery pack (22) is detachably secured to the hand-held device (10) and may be replaced with a connection module (24) that may be connected to an external power source, and wherein at least the hand-held device (10) and the battery pack (22) comprise a microcontroller (32, 38, 44) that is connected to-the data bus (46).

2. The light polymerization device as claimed in claim 1, **characterized in that** the hand-held device (10) and the battery pack (22) each at least comprise an interface for the data bus (46), which is arranged additional to, and especially adjacent to, feeding current contacts for providing the electrical supply energy.

3. The light polymerization device as claimed in claim 1, **characterized in that** the base station (30) and/or at least one other module (62) each comprises at least one interface for the data bus (46), which is arranged additional to, and especially adjacent to, feeding current contacts for providing the electrical supply energy.

4. The light polymerization device as claimed in claim 2 or 3, **characterized in that** the at least one interface for the data bus (46) and the feeding current contacts are formed as a multi-plug or multi-jack.

5. The light polymerization device as claimed in one of the preceding claims, **characte-rized in that** the data bus (46) is arranged between the hand-held device (10) and the battery pack (22) or between the base station (30), the battery pack (22) and the hand-held device (10).

6. The light polymerization device as claimed in one of the preceding claims, **characterized in that** the connection module (24) that is connected to an external power supply in particular by means of a power supply unit (60), may be brought into connection with the hand-held device (10) or with the base station (30) in particular with the aid of a multi-plug or a multi-jack.

7. The light polymerization device as claimed in one of the preceding claims, **characterized in that** in connection with a mains operation of the hand-held device (10), the connection module (24) is integrated into the hand-held device (10), in particular into the hand grip (14) thereof, and supplies the electrical supply energy via a supply cable (50) to the hand-held device (10).

8. The light polymerization device as claimed in one of the preceding claims, **characterized in that** a service module (62) that is connected in particular with a computer (66) and, via a power supply unit (60), with an external energy source, is connectable with-the hand-held device (10) or the base station (30), said service module (62) effecting at least an adjustment of the hand-held device (10), in particular the calibration thereof, and effecting the transmission of data stored in the hand-held device (10) and/or in the battery pack (22) and/or in the base station (30) to the computer (66).

9. The light polymerization device as claimed in one of the preceding claims, **characterized in that** the connection module (24), the battery pack (22) and a service module (62) have, upon insertion into or additon to the hand-held device (10), an outer configuration which extends flush with a surface of the hand-held (10) device.

10. The light polymerization device as claimed in one of the preceding claims, **characterized in that** the battery pack (22), the connection module (24) and the service module (62) may at least partially be received within the housing (20) of the base station (30) or may be attached thereto.

11. The light polymerization device as claimed in one of the preceding claims, **characterized in that** the connection module (24) and the service module (62) comprise a housing, the shape and interface of which correspond to the housing of the battery pack (22).

12. The light polymerization device as claimed in one of the preceding claims, **characterized in that** the housing of the battery pack (22), the connection module (24) or the service module or service adapter (62) forms part of the hand grip of the hand-held device.

13. The light polymerization device as claimed in one of the preceding claims, **characterized in that** the data bus (46) is a selected one of an Aladin bus and a serial bus that in particular merely requires a signal line.

14. The light polymerization device as claimed in one of the preceding claims, **characterized in that** the data bus (46) establishes fixed addresses of the modules of the hand-held device (10) and the base station (30), both modules having the same rank, and **characterized in that** in particular at least the hand-held device (10) and/or the base station (30) and/or the battery pack (22) comprise a microcontroller (38, 44).

15. The light polymerization device as claimed in one of the preceding claims, **characterized in that** calibration data, light output data, measuring data and/or operating time data of the light polymerization device are at least stored in the hand-held device (10), and in particular are stored as well in the base station (30) following a reading thereof via the data bus (46).

## Revendications

1. Dispositif de polymérisation par la lumière qui présente au moins les modules station de base (30), outil portatif (10) et pack d'accumulateurs (22), où l'outil portatif (10) est insérable dans la station de base (30), **caractérisé en ce qu'**un bus de données (46) est prévu au moins entre l'outil portatif (10) est le pack d'accumulateurs (22), par lequel sont transférables des données, de préférence des données de contrôle pour l'outil portatif (10), où l'outil portatif (10) est attaché amoviblement au pack doaccumulateurs (22) et est échangeable avec un module de connexion (24) raccordable avec une source de courant externe, et où au moins l'outil portatif (10) est le pack d'accumulateurs (22) présentent un microcontrôleur (32, 38, 44) à qui est relié au bus de données (46).

2. Dispositif de polymérisation par la lumière selon la revendication 1, **caractérisé en ce que** l'outil portatif (10) et les packs d'accumulateurs (22) présentent chacun au moins une interface pour le bus de données (46) qui en plus est disposée de préférence avoisinant des contacts d'alimentation pour la transmission de l'énergie d'approvisionnement.

3. Dispositif de polymérisation par la lumière selon la revendication 1, **caractérisé en ce que** la station de base (30) et/ou au moins un autre module (62) présentent chacun au moins une interface pour le bus de données (46) qui en plus est disposée de préférence avoisinant des contacts d'alimentation pour la transmission de l'énergie d'approvisionnement.

4. Dispositif de polymérisation par la lumière selon l'une quelconque des revendications 2 ou 3, **caractérisé en ce que** l'au moins une interface pour le bus de données (46) et les contacts de l'alimentation se présentent sous la forme d'une prise de courant multiple et/ou une douille.

5. Dispositif de polymérisation par la lumière selon l'une des revendications précédentes, **caractérisé en ce que** le bus de données (46) est disposé entre l'outil portatif (10) et le pack d'accumulateurs (22) ou entre la station de base (30), le pack d'accumulateurs (22) et l'outil portatif (10).

6. Dispositif de polymérisation par la lumière selon l'une des revendications précédentes, **caractérisé en ce que** le module de connexion (24), relié de préférence à une source de courant externe par un bloc d'alimentation (60), de préférence une prise de courant multiple ou une douille, peut être mis en connexion avec l'outil portatif (101) ou la station de base (30).

7. Dispositif de polymérisation par la lumière selon l'une des revendications précédentes, **caractérisé en ce que** lors de l'utilisation de l'outil portatif (10) sur le secteur, le module de connexion (24) est intégré dans l'outil portatif (10), de préférence dans sa poignée (14), et transmet l'énergie d'approvisionnement électrique à l'outil portatif (10) par un câble d'alimentation (50).

8. Dispositif de polymérisation par la lumière selon l'une des revendications précédentes, **caractérisé en ce qu'**un module de service (62) raccordable de préférence à un ordinateur (66) ainsi qu'à une source d'énergie externe par un bloc d'alimentation (60), est raccordable avec l'outil portatif (10) ou la station de base (30), par lequel au moins l'outil portatif (10) est réglable, de préférence calibrable et/ou par lequel dans l'outil portatif (10) et/ou dans le pack d'accumulateurs (22) et/ou dans la station de base (30) des données stockées sont transférables vers l'ordinateur (66).

9. Dispositif de polymérisation par la lumière selon l'une des revendications précédentes, **caractérisé en ce que** le module de connexion (24), le pack d'accumulateurs (22) et le module de service (62) présentent une forme extérieure à niveau avec la surface de l'outil portatif (10) lors d'être inséré ou attaché dans ou sur l'outil portatif (10).

10. Dispositif de polymérisation par la lumière selon l'une des revendications précédentes, **caractérisé en ce que** le module de connexion (24), le pack d'accumulateurs (22) et le module de service (62) peuvent être au moins partiellement accueillis dans le boîtier (20) de la station de base (30) ou être attaché à celui-ci.

11. Dispositif de polymérisation par la lumière selon l'une des revendications précédentes, **caractérisé en ce que** l'élément de connexion (24) et le module de service (62) possède un boîtier dont l'élément de raccordement dont la forme et l'interface correspondent au boîtier du pack d'accumulateurs (22).

12. Dispositif de polymérisation par la lumière selon l'une des revendications précédentes, **caractérisé en ce que** le boîtier du pack d'accumulateurs (22), du module de connexion (24) ou de l'adaptateur de service (62) forme une partie des poignées de l'outil portatif.

13. Dispositif de polymérisation par la lumière selon l'une des revendications précédentes, **caractérisé en ce que** le bus de données (46) est un bus Aladin ou un autre bus sériel qui n'a besoin de préférence que d'un circuit d'acheminement des signaux.

14. Dispositif de polymérisation par la lumière selon l'une des revendications précédentes, **caractérisé en ce que** le bus de données (46) définit des adresses fixes des modules outil portatif (10) et station de base (30) qui sont au même niveau l'un par rapport aux autres, et que de préférence au moins l'outil portatif (22) et/ou la station de base (30) et/ou le pack d'accumulateurs (22) présentent un microcontrôleur (38,44).

15. Dispositif de polymérisation par la lumière selon l'une des revendications précédentes, **caractérisé en ce que** des données de lumière, de calibrage, de performance lumineuse et/ou de période de fonctionnement du dispositif de polymérisation par la lumière sont stockées au moins dans l'outil portatif (10), de préférence après lecture sur le bus de données (46) aussi dans la station de base (30).
